# EUROPEAN PATENT APPLICATION

(11) **EP 2 685 162 A1**
(43) Date of publication of application: **15.01.2014**
(21) Application number: 12175644.9
(22) Date of filing: 10.07.2012
(51) Int. Cl.: F23C 7/00

(54) **Premix burner of the multi-cone type for a gas turbine and method for operating such a burner**

(71) Applicant: Alstom Technology Ltd, 5400 Baden (CH)
(72) Inventor: Pasqualotto, Ennio, 8400 Winterthur (CH); Eroglu, Adnan, 5417 Untersiggenthal (CH)

(57) **Abstract**

The invention relates to a premix burner of the multi-cone type for a gas turbine, comprising a plurality of at least four shells, which are arranged around a central burner axis and are parts of a virtual, axially extending common cone, which opens in a downstream direction, whereby said parts are displaced perpendicular to said burner axis (11) such that a tangential slot is defined between each pair of adjacent shells, and whereby each of the shells is equipped with at least one premix gas channel (15a-d) extending along an axially oriented edge of the respective shell such that a fuel gas can be injected from said premix gas channel (15a-d) through gas injection holes (20) into a stream of air entering the interior of the arrangement of shells through the adjacent slot.

A more stable operation is achieved by having said premix gas channels (15a-d) distributed around said burner axis (11) in a pairwise opposing arrangement, whereby a first pair of opposing premix gas channels (15a, 15c) has a first premix hole pattern with fuel injection holes (20) concentrated in the upstream part of the channels and thus enriching the air with fuel near the burner axis (11), and a second pair of opposing premix gas channels (15b, 15d) has a premix hole pattern with fuel injection holes (20) concentrated in the downstream part of the channels, achieving a wider distribution of the fuel away from the burner axis.

## Description

### BACKGROUND OF THE INVENTION

The present invention relates to the technology of gas turbines. It refers to a premix burner of the multi-cone type for a gas turbine according to the preamble of claim 1.

It further relates to a method for operating such a premix burner.

### PRIOR ART

In the past more than 20 years burners with short but effective premixing zones (so-called EV burners: environmental friendly V-shaped burners) have been implemented in several gas turbines of the applicant, with very low NOx levels. In addition to this, three variants of premix technologies have been successfully developed and deployed into those gas turbine engines: the sequential EV burners - a technology that allows premixing of natural gas and oil into a hot exhaust stream to reheat the exhaust gases of a first high pressure turbine; the MBtu EV burners that are used to burn syngas in a premix flame with low NOx emissions; and the advanced EV burners (AEV) that are capable to prevaporize and premix liquid fuel prior to combustion and burn it with very low NOx emissions without water injection.

Document EP 0 851 172 A2 discloses an exemplary EV burner of the double-cone type, for operating a combustion chamber with a liquid and/or gaseous fuel, whereby the combustion air required for this purpose is directed through tangential air-inlet ducts into an interior space of the burner. This directing of the flow results in a swirl flow in the interior space, which swirl flow induces a backflow zone at the outlet of the burner. In order to stabilize the flame front forming there, at least one zone is provided at each sectional body forming the burner, within which zone inlet openings are provided for the injection of supplementary air into the swirl flow. Due to this injection, a film forms at the inner wall of the sectional bodies, which film prevents the flame from being able to flashback along the inner wall of the sectional bodies into the interior space of the burner.

Document DE 195 45 310 A1 discloses a further pre-mixing burner consisting of a hollow cone with an outer and inner cone casing. At least two inlet ducts run at a tangent to the inner cone casing and are positioned along a straight cone casing line. The part cone axes of the part shells formed lie on the same cone axis. The pre-mixing burner is divided into at least two, for example four, parts containing the inlet ducts so as to swirl the combustion air. A fuel nozzle is positioned at the cone tip for injecting liquid fuel.

Document WO 2005/095863 A1 discloses a burner a vortex generator that consists essentially of two half hollow conical body segments arranged offset from one another. The two conical body segments each have a fuel pipe that have orifices through which the gaseous fuel flows that is admixed with the combustion air flowing through the tangential air inlet ducts.

The orifices of the first fuel pipe are arranged asymmetrically in relation to the orifices of the second fuel pipe. Fuel orifices of the first fuel pipe therefore lie opposite areas of the second fuel pipe in which no fuel orifices are arranged, and fuel orifices of the second fuel pipe thus lie opposite areas of the first fuel pipe in which no fuel orifices are located. As a result, an asymmetric fuel profile is created when the fuel is injected into the combustion air. This asymmetric arrangement of the fuel orifices and the asymmetric fuel profile thereby created suppress pulsations. The type and extent of asymmetry created always has to be adapted to the particular case. Burner systems with few pulsations can have a low asymmetry of the fuel injection nozzles, while the asymmetry has to be increased for systems with a high level of pulsations.

The current arrangements of internal fuel stages either subdivide the gas channels sequentially or apply the first stage from the lance instead of the gas channel. The first solution is very complicated and expensive whereas the problem associated with the latter consists in the fact that the fuel of the first stage is injected radially outwards and therefore leading to a lean fuel concentration at the burner axis where the central recirculation zone is located. At engine start-up it is therefore not possible to further increase the flame temperature in the stabilizing central zone of the burner as the more the first stage fuel mass flow is increased the higher becomes its radial penetration.

A premix burner runs into lean extinction at low part load if operated with the same fuel to air mixture as at full load for which it has been designed.

### SUMMARY OF THE INVENTION

It is an object of the present invention to provide a premix burner which avoids the disadvantages of known premix burners and allows a smooth and safe operation in different phases of operation of the associated gas turbine.

It is another object of the invention to teach a method for operating such a premix burner.

These and other objects are obtained by a premix burner according to claim 1 and a method according to claim 4.

The invention avoids both inconveniences of the prior art by adopting staging of at least four gas channels in parallel which apply different fuel injector hole patterns oriented always towards the burner axis.

The premix burner according to the invention comprises a plurality of at least four shells, which are arranged around a central burner axis and are parts of a virtual, axially extending common cone, which opens in a downstream direction, whereby said parts are displaced perpendicular to said burner axis such that a tangential slot is defined between each pair of adjacent shells, and whereby each of the shells is equipped with at least one premix gas channel extending along an axially oriented edge of the respective shell such that a fuel gas can be injected from said premix gas channel through gas injection holes into a stream of air entering the interior of the arrangement of shells through the adjacent slot.

It is characterized in that said premix gas channels are distributed around said burner axis in a pairwise opposing arrangement, that a first pair of opposing premix gas channels has a first premix hole pattern with fuel injection holes concentrated in the upstream part of the channels and thus enriching the air with fuel near the burner axis, and that a second pair of opposing premix gas channels has a premix hole pattern with fuel injection holes concentrated in the downstream part of the channels, achieving a wider distribution of the fuel away from the burner axis.

According to an embodiment of the invention each pair of opposing premix gas channels is fed by a separate fuel gas line.

According to another embodiment of the invention each of said premix gas channels comprises at least two parallel gas premix lines, that a first premix gas line of each premix gas channel has a first premix hole pattern with fuel injection holes concentrated in the upstream part of the channels and thus enriching the air with fuel near the burner axis, that a second premix gas line of each premix gas channel has a premix hole pattern with fuel injection holes concentrated in the downstream part of the channels, achieving a wider distribution of the fuel away from the burner axis, and that the first and second premix gas lines are fed by respective common fuel gas lines.

The method according to the invention is characterized in that at engine start up and low part load the first pair of opposing premix gas channels is fed predominantly in order to achieve a sufficient fuel concentration along the burner axis and at the central burner recirculation zone.

According to an embodiment of the inventive method at higher engine loads, the premix gas is distributed more evenly on all premix gas channels.

### BRIEF DESCRIPTION OF THE DRAWINGS

The present invention is now to be explained more closely by means of different embodiments and with reference to the attached drawings.
- Fig. 1: shows in a perspective view a part of a premix burner of a multi-cone type, which can be advantageously used in connection with the present invention;
- Fig. 2: shows, in an axial view in upstream direction, the gas premix channels of Fig. 1 with a gas injection hole pattern according to an embodiment of the invention; and
- Fig. 3: shows, in an axial view in upstream direction, the gas premix channels of Fig. 1, each comprising two gas premix lines with different injection hole patterns according to another embodiment of the invention.

### DETAILED DESCRIPTION OF DIFFERENT EMBODIMENTS OF THE INVENTION

With regard to premixing burners, an internal fuel staging is defined by using different injection hole patterns on alternating gas channels and applying different fuel supply lines to alternating gas channels or lines, respectively.

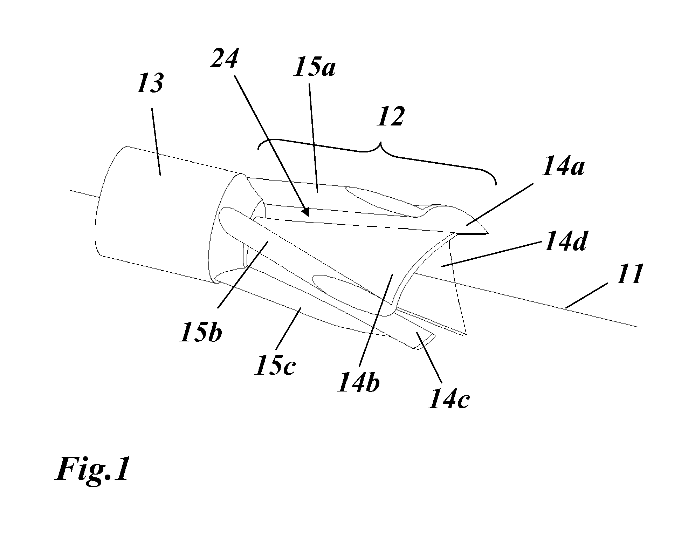

Fig. 1 shows in a perspective view a part of a premix burner of a multi-cone type, which can be advantageously used in connection with the invention. The part shown in Fig. 1 comprises along a central burner axis 11 a fuel lance 13 (at least part of it) and a swirler 12. The swirler 12 consists of four burner shells 14a-d, which are arranged around the central burner axis 11 and are parts of a virtual, axially extending common cone (not shown), which opens in a downstream direction, whereby said parts or shells 14a-d are displaced perpendicular to said burner axis 11 such that a tangential slot 24 is defined between each pair of adjacent shells 14a-d

Each of the shells 14a-d is equipped with a premix gas channel 15a-c extending along an axially oriented edge of the respective shell such that a fuel gas can be injected from said premix gas channel 15a-c through gas injection holes (not shown in Fig. 1) into a stream of air entering the interior of the arrangement of shells 14a-d through the adjacent slot 24.

The four gas premix channels 15a-c of the above described burner concept are utilized for premixing a fuel gas through a number of gas injection holes along these channels. In general, the premix gas holes can be distributed evenly along the channels and the same premix fuel line feeds all four channels.

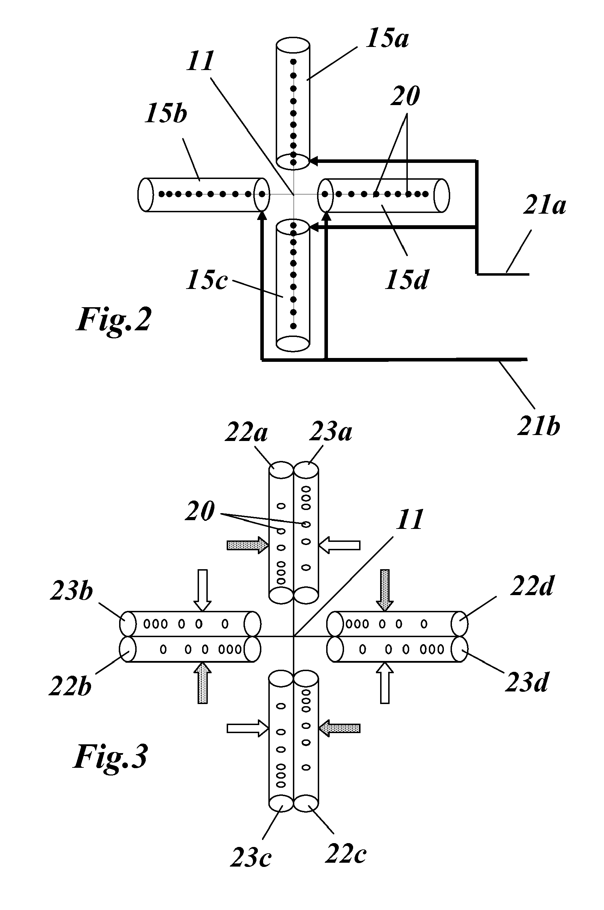

However, according to an embodiment of the invention shown in Fig. 2 the arrangement of four gas premix channels 15a-d is subdivided into two pairs of opposing gas channels, namely a first pair with channels 15a and 15c and a second pair with channels 15b and 15d. These two pairs are fed by separate fuel gas lines 21 a and 21 b, where the radial direction from the centre in Fig. 2 corresponds to the flow direction in the gas premix channels 15a-d.

The gas premix channels 15a and 15c of the first pair have a pattern of unevenly distributed gas injection holes 20 with holes concentrated in the upstream part of the channels and thus enriching the air with fuel near the burner axis 11.

The gas premix channels 15b and 15d of the second pair have a pattern of unevenly distributed gas injection holes 20 with holes concentrated in the downstream part of the channels, achieving a wider distribution of the fuel away from the burner axis 11.

At engine start-up and low part-load of the corresponding gas turbine the gas premix channels 15a and 15c are fed predominantly in order to achieve a sufficient fuel concentration along the burner axis 11 and at the central burner recirculation zone. At higher engine loads, the premix gas is distributed more evenly on all the four gas premix channels 15a-d. This staged fuel gas injection results in a safe operation of the combustor of the gas turbine in different phases of operation.

To achieve a stronger fuel gas staging effect, each of the four gas premix channels (15a-d in Fig. 2) can consist, as shown in Fig. 3, of two parallel gas premix lines 22a-d and 23a-d, one for stage 1 and the other for stage 2. The first gas premix lines 22a-d of all gas premix channels are fed by a first common fuel supply line (dark arrows), while the second gas premix lines 23a-d of all gas premix channels are fed by a second common fuel supply line (light arrows).

### LIST OF REFERENCE NUMERALS

- 10: premix burner
- 11: burner axis
- 12: swirler
- 13: fuel lance
- 14a-d: shell (conical)
- 15a-d: gas premix channel
- 20: gas injection hole
- 21a,b: fuel gas line
- 22a-d: gas premix line
- 23a-d: gas premix line
- 24: slot

## Claims

1. Premix burner (10) of the multi-cone type for a gas turbine, comprising a plurality of at least four shells (14a-d), which are arranged around a central burner axis (11) and are parts of a virtual, axially extending common cone, which opens in a downstream direction, whereby said parts are displaced perpendicular to said burner axis (11) such that a tangential slot (24) is defined between each pair of adjacent shells (14a-d), and whereby each of the shells (14a-d) is equipped with at least one premix gas channel (15a-d; 22a-d, 23a-d) extending along an axially oriented edge of the respective shell such that a fuel gas can be injected from said premix gas channel (15a-d; 22a-d, 23a-d) through gas injection holes (20) into a stream of air entering the interior of the arrangement of shells (14a-d) through the adjacent slot (24), **characterized in that** said premix gas channels (15a-d; 22a-d, 23a-d) are distributed around said burner axis (11) in a pairwise opposing arrangement, that a first pair of opposing premix gas channels (15a, 15c) has a first premix hole pattern with fuel injection holes (20) concentrated in the upstream part of the channels and thus enriching the air with fuel near the burner axis (11), and that a second pair of opposing premix gas channels (15b, 15d) has a premix hole pattern with fuel injection holes (20) concentrated in the downstream part of the channels, achieving a wider distribution of the fuel away from the burner axis.

2. Premix burner according to claim 1, **characterized in that** each pair of opposing premix gas channels is fed by a separate fuel gas line (21 a, 21 b).

3. Premix burner according to claim 1, **characterized in that** each of said premix gas channels comprises at least two parallel gas premix lines (22a-d, 23a-d), that a first premix gas line (22a-d) of each premix gas channel has a first premix hole pattern with fuel injection holes (20) concentrated in the upstream part of the channels and thus enriching the air with fuel near the burner axis (11), that a second premix gas line (23a-d) of each premix gas channel has a premix hole pattern with fuel injection holes (20) concentrated in the downstream part of the channels, achieving a wider distribution of the fuel away from the burner axis, and that the first and second premix gas lines (22a-d, 23a-d) are fed by respective common fuel gas lines.

4. Method for operating a premix burner according to claim 2, **characterized in that** at engine start up and low part load the first pair of opposing premix gas channels (15a, 15c) is fed predominantly in order to achieve a sufficient fuel concentration along the burner axis and at the central burner recirculation zone.

5. Method according to claim 4, **characterized in that** at higher engine loads, the premix gas is distributed more evenly on all premix gas channels (15a-d).
